# EUROPEAN PATENT APPLICATION

(11) **EP 4 632 007 A1**
(43) Date of publication of application: **15.10.2025**
(21) Application number: 23909852.8
(22) Date of filing: 27.11.2023
(51) Int. Cl.: C08L 69/00, C08L 25/12

(54) **POLYCARBONATE ALLOY COMPOSITION WITH STABLE THERMO-OXIDATIVE AGING PERFORMANCE, PREPARATION METHOD THEREFOR AND USE THEREOF**

(30) Priority: 30.12.2022 CN 202211727390
(71) Applicant: KINGFA SCI. & TECH. CO., LTD., Guangzhou, Guangdong 510663 (CN)
(72) Inventor: CEN, Yin, Guangzhou, Guangdong 510663 (CN); CHEN, Pingxu, Guangzhou, Guangdong 510663 (CN); AI, Junwei, Guangzhou, Guangdong 510663 (CN); DING, Chao, Guangzhou, Guangdong 510663 (CN); YE, Nanbiao, Guangzhou, Guangdong 510663 (CN); WANG, Peitao, Guangzhou, Guangdong 510663 (CN); TIAN, Zhengyu, Guangzhou, Guangdong 510663 (CN); DONG, Xiangmao, Guangzhou, Guangdong 510663 (CN); CHEN, Yongwen, Guangzhou, Guangdong 510663 (CN)
(74) Representative: Petraz, Gilberto Luigi
(86) International application number: PCT/CN2023/134343
(87) International publication number: WO 2024/139921

(57) **Abstract**

The present invention relates to a polycarbonate alloy composition with stable thermo-oxidative aging performance, and a preparation method therefor and use thereof. The polycarbonate alloy composition with stable thermo-oxidative aging performance includes the following components in parts by weight: 50-85 parts of polycarbonate, 1-20 parts of a styrene-acrylonitrile copolymer compound, 5-20 parts of a flame retardant, 1-25 parts of a toughening agent, 0.1-2 parts of a stabilizer, and 0.1-5 parts of an anti-dripping agent, wherein the styrene-acrylonitrile copolymer compound is composed of a styrene-acrylonitrile copolymer and a maleic anhydride grafted styrene-acrylonitrile copolymer at a mass ratio of (2-8):1. The polycarbonate alloy composition not only has good thin-wall flame retardance and toughness, but also has good long-term thermo-oxidative aging stability, and thus can be widely applied to application scenarios with higher service safety requirements.

## Description

### TECHNICAL FIELD

The present invention relates to the field of engineering plastics, and more specifically relates to a polycarbonate alloy composition with stable thermo-oxidative aging performance, and a preparation method therefor and use thereof.

### BACKGROUND

With the development of society, various industries have gradually increased the attention to potential safety hazards. Therefore, requirements for the service safety of materials in the industries, such as electronic and electrical appliances, transportation, household appliances, electric tools, buildings, and aerospace, are becoming increasingly high. PC/SAN alloy materials have been commonly used in the above industries. The existing PC/SAN alloy materials generally have higher retention rates of notch impact strength and tensile strength after a long-term thermo-oxidative aging test at 85-95°C (e.g., a PC/SAN alloy material provided by a Chinese patent titled "Polycarbonate Alloy Material, and Preparation Method Therefor and Use thereof"). However, the PC/SAN alloy materials that only meet requirements of the long-term thermo-oxidative aging test at 85-95°C are gradually not applicable to application scenarios with higher service safety requirements. For example, in the electronic and electrical industry, especially in the new energy industry, the PC/SAN alloy materials still need to have higher retention rates (greater than 50%) of notch impact strength and tensile strength after aging above a Tg temperature (110-130°C) to avoid the risk that components and parts prepared from the materials are prone to undergoing deformation at a high temperature. Therefore, it is necessary to develop a PC/SAN alloy material that still has better retention rates of notch impact strength and tensile strength after a long-term thermo-oxidative aging test at 110-130°C to meet requirements of safe service.

### SUMMARY

A primary objective of the present invention is to overcome the above problem that existing PC/SAN alloy materials cannot meet use requirements for retention rates of notch impact strength and tensile strength after a long-term thermo-oxidative aging test at 110-130°C, and to provide a polycarbonate alloy composition with stable thermo-oxidative aging performance. The polycarbonate alloy composition not only has good thin-wall flame retardance and toughness, but also has good long-term thermo-oxidative aging stability, and can be widely applied to manufacturing of electronic and electrical appliances, household appliances, new energy vehicles and other fields.

A further objective of the present invention is to provide a method for preparing the above polycarbonate alloy composition.

A further objective of the present invention is to provide use of the above polycarbonate alloy composition in preparation of an energy storage device.

The above objectives of the present invention are achieved through the following technical solutions.

A polycarbonate alloy composition with stable thermo-oxidative aging performance includes the following components in parts by weight:
50-85 parts of polycarbonate,
1-20 parts of a styrene-acrylonitrile copolymer compound,
5-20 parts of a flame retardant,
1-25 parts of a toughening agent,
0.1-2 parts of a stabilizer, and
0.1-5 parts of an anti-dripping agent,
where the styrene-acrylonitrile copolymer compound is composed of a styrene-acrylonitrile copolymer and a maleic anhydride grafted styrene-acrylonitrile copolymer at a mass ratio of (2-8):1.

The inventor of the present invention finds through repeated studies that by adding the styrene-acrylonitrile copolymer and the maleic anhydride grafted styrene-acrylonitrile copolymer into the polycarbonate system and regulating the mass ratio of the two, the polycarbonate alloy composition with a microscopic non-uniform island structure and macroscopic consistency can be obtained. An island of the island structure is composed of 10-200 spherical particles, and a particle size of the spherical particles is about 100-400 nm. The island structure has good stability, thereby endowing the polycarbonate alloy composition with good long-term thermo-oxidative aging stability at a macroscopic level. Specifically, the obtained polycarbonate alloy composition has a notch impact strength retention rate of >50% and a tensile strength retention rate of >50% after thermo-oxidative aging at 130°C for 500 hours, and can be widely applied to application scenarios with higher service safety requirements.

In addition, the polycarbonate alloy composition also has good thin-wall flame retardance and toughness (notch impact strength).

That is, the polycarbonate alloy composition of the present invention not only has the good thin-wall flame retardance and toughness, but also has the good long-term thermo-oxidative aging stability (the good aging notch impact strength retention rate and the good aging tensile strength retention rate), and can be widely applied to manufacturing of electronic and electrical appliances, household appliances, new energy vehicles and other fields.

Preferably, the polycarbonate alloy composition with stable thermo-oxidative aging performance includes the following components in parts by weight:
60-80 parts of the polycarbonate,
3-10 parts of the styrene-acrylonitrile copolymer compound,
7-10 parts of the flame retardant,
3-10 parts of the toughening agent,
0.15-1.5 parts of the stabilizer, and
0.3-0.8 part of the anti-dripping agent.

Preferably, the mass ratio of the styrene-acrylonitrile copolymer to the maleic anhydride grafted styrene-acrylonitrile copolymer is (2-7):1.

The styrene-acrylonitrile copolymer that is commonly used in the art can be used in the present invention.

Preferably, the styrene-acrylonitrile copolymer is obtained by a bulk polymerization method.

Preferably, a grafting rate of the maleic anhydride grafted styrene-acrylonitrile copolymer is 0.3-1.5%.

The grafting rate of maleic anhydride is determined by the following process: testing a sample with a fixed thickness by a Fourier infrared spectrometer to obtain an infrared spectral characteristic absorption peak, conducting normalization processing, and calculating and obtaining the grafting rate of maleic anhydride based on a ratio of light absorption intensity of a stretching vibration peak of a maleic anhydride ring (at 1100 cm⁻¹) to a stretching vibration peak of acrylonitrile (at 2450 cm⁻¹).

The polycarbonate, the toughening agent, the flame retardant and the anti-dripping agent that are commonly used in the art can all be used in the present invention.

Preferably, an average molecular weight of the polycarbonate is 20,500-33,500.

Optionally, the toughening agent includes, but is not limited to, EM500, M521, M6332, S2001, S2006, S2130, PTW, EMA, EBA, etc.

Preferably, a metal ash content of the toughening agent is ≤1.2 wt%.

More preferably, the metal ash content of the toughening agent is 0.8-1.2 wt%.

The metal ash content of the toughening agent can be measured by the following method: weighing a fixed weight of the toughening agent, placing the toughening agent in a muffle furnace with a preset temperature of 700°C, taking out the toughening agent after 6 hours, and weighing the weight of the metal ash content.

Preferably, the flame retardant is a phosphorus based flame retardant, including but not limited to, TPP, BDP, RDP, RDX, or phenoxyposphazene, etc.

Preferably, the stabilizer is composed of an epoxy stabilizer and a hindered phenol stabilizer at a mass ratio of (2-1):1.

Preferably, the anti-dripping agent is a fluoropolymer, for example, including but not limited to, SAN coated PTFE, MMA coated PTFE, organosilicone coated PTFE, PTFE pure powder, or a PTFE emulsion, etc.

In order to obtain performance in other aspects, 0.1-5 parts of other auxiliary agents can also be added into the polycarbonate alloy composition of the present invention.

Optionally, the other auxiliary agents are at least one of a lubricant or a toner pigment.

Preferably, the lubricant is at least one of PE wax or an ester.

Preferably, the toner pigment is at least one of carbon black or titanium dioxide.

A method for preparing the above polycarbonate alloy composition includes the following steps: mixing the respective components, conducting melt extrusion, and conducting granulation to obtain the polycarbonate alloy composition.

Preferably, the preparation method includes the following steps: stirring and mixing the respective components in a high-speed mixer, then conducting the melt extrusion in a twin-screw extruder, and conducting the granulation to obtain the polycarbonate alloy composition.

More preferably, a rotation speed of the stirring and mixing is 30-80 rpm/min; and the twin-screw extruder has a length-diameter ratio of (35-60):1, a screw cylinder temperature of 220-260°C and a screw rod rotation speed of 200-800 rpm/min.

Use of the above polycarbonate alloy composition in preparation of an energy storage device also falls in the scope of protection of the present invention.

Preferably, the energy storage device is a mobile power source, a high-power mobile power source, or an industrial power source.

Compared with the prior art, the present invention has the following beneficial effects:
The polycarbonate alloy composition of the present invention not only has the good thin-wall flame retardance and toughness, but also has the good long-term thermo-oxidative aging stability, and can be widely applied to manufacturing of electronic and electrical appliances, household appliances, new energy vehicles and other fields.

### DETAILED DESCRIPTION OF EMBODIMENTS

To describe the technical solutions of the present invention more clearly and completely, the present invention is further described in detail through specific examples below. It is understandable that the specific examples described herein are only used to explain the present invention and are not used to limit the present invention, and various changes can be made within the scope limited by the claims of the present invention.

Some of the reagents used in respective examples and comparative examples of the present invention are illustrated as follows:
polycarbonate 1#: S-2000F, Shanghai Mitsubishi, with an average molecular weight of 26,500;
polycarbonate 2#: E-1000F, Shanghai Mitsubishi, with an average molecular weight of 33,500;
polycarbonate 3#: H-2000F, Shanghai Mitsubishi, with an average molecular weight of 20,500;
polycarbonate 4#: FN1500, Idemitsu, Japan, with an average molecular weight of 14,300;
styrene-acrylonitrile copolymer 1#: SAN2200, Taiwan Chemical Fiber, bulk polymerization method;
styrene-acrylonitrile copolymer 2#: SAN2200AN, Taiwan Chemical Fiber, emulsion method;
maleic anhydride grafted styrene-acrylonitrile copolymers 1-4#: self-made, prepared by the following method: mixing the styrene-acrylonitrile copolymer 1# with a certain amount of maleic anhydride, and conducting melt extrusion at an extrusion temperature of 220°C to obtain a maleic anhydride grafted styrene-acrylonitrile copolymer with a specific grafting rate; during the preparation, the maleic anhydride grafted styrene-acrylonitrile copolymers with different grafting rates can be obtained by adding different amounts of the maleic anhydride; the grafting rate of maleic anhydride is determined by the following process: testing a sample with a fixed thickness by a Fourier infrared spectrometer to obtain an infrared spectral characteristic absorption peak, conducting normalization processing, and calculating and obtaining the grafting rate of maleic anhydride based on a ratio of light absorption intensity of a stretching vibration peak of a maleic anhydride ring (at 1100 cm⁻¹) to a stretching vibration peak of acrylonitrile (at 2450 cm⁻¹); the grafting rates of the respective maleic anhydride grafted styrene-acrylonitrile copolymers are as follows:
maleic anhydride grafted styrene-acrylonitrile copolymer 1#: the grafting rate of 0.8%;
maleic anhydride grafted styrene-acrylonitrile copolymer 2#: the grafting rate of 0.3%;
maleic anhydride grafted styrene-acrylonitrile copolymer 3#: the grafting rate of 1.5%;
maleic anhydride grafted styrene-acrylonitrile copolymer 4#: the grafting rate of 0.1%;
acrylic acid grafted styrene-acrylonitrile copolymer: a grafting rate of 0.8%, self-made, prepared by the following method: mixing the styrene-acrylonitrile copolymer 1# with acrylic acid, and conducting melt extrusion at an extrusion temperature of 220°C to obtain the maleic anhydride grafted styrene-acrylonitrile copolymer with the grafting rate of 0.8%, wherein an addition amount of the acrylic acid is 0.8% of a mass of the styrene-acrylonitrile copolymer 1#;
toughening agent 1#: EM500, LG, South Korea, with an ash content of 1.2 wt%;
toughening agent 2#: M521, Kaneka, Japan, with an ash content of 0.8 wt%;
toughening agent 3#: M6332, Shandong Wanda, with an ash content of 1.7 wt%;
stabilizer 1#: epoxy type, SAG-002, Yijiarong;
stabilizer 2#: hindered phenol type, antioxidant 1076, BASF;
flame retardant 1#: FP-600, phosphorus based flame retardant, Adeka, Japan;
flame retardant 2#: EF-42, non-phosphorus based flame retardant, Mitsubishi, Japan;
anti-dripping agent: SAN coated PTFE, with an effective content of 50%, commercially available;
other auxiliary agents: lubricant PETS, commercially available;
styrene-acrylonitrile copolymer compounds: self-made, with the composition shown in Table 1, prepared in the following process: mixing the styrene-acrylonitrile copolymers with the maleic anhydride grafted styrene-acrylonitrile copolymers.

**Table 1 Formulas of styrene-acrylonitrile copolymer compounds (in parts by weight)**

| | Styrene-acrylonitrile copolymer compound | | | | | | | | | | | |
|---|---|---|---|---|---|---|---|---|---|---|---|---|
| | 1# | 2# | 3# | 4# | 5# | 6# | 7# | 8# | 9# | 10# | 11# | 12# |
| Styrene-acrylonitrile copolymer 1# | 5 | 8 | 2 | 7 | 3 | / | 5 | 5 | 5 | 1 | 9 | 5 |
| Styrene-acrylonitrile copolymer 2# | / | / | / | / | / | 5 | / | / | / | / | / | / |
| Maleic anhydride grafted styrene-acrylonitrile copolymer 1# | 1 | 1 | 1 | 1 | 1 | 1 | / | / | / | 1 | 1 | / |
| Maleic anhydride grafted styrene-acrylonitrile copolymer 2# | / | / | / | / | / | / | 1 | / | / | / | / | / |
| Maleic anhydride grafted styrene-acrylonitrile copolymer 3# | / | / | / | / | / | / | / | 1 | / | / | / | / |
| Maleic anhydride grafted styrene-acrylonitrile copolymer 4# | / | / | / | / | / | / | / | / | 1 | / | / | / |
| Acrylic acid grafted styrene-acrylonitrile copolymer | / | / | / | / | / | / | / | / | / | / | / | 1 |

Unless otherwise specified, respective components (e.g., the anti-dripping agent and the other auxiliary agents) selected in parallel examples and comparative examples are identical commercially available products.

Properties of polycarbonate alloy compositions provided in respective examples and comparative examples of the present invention are tested according to the following test methods:
Tensile strength and retention rate: According to ASTM D638-2017, test sample strips were prepared by an injection molding process or a hot pressing process according to requirements of TYPE I; 5 prepared sample strips were placed in a constant-temperature and constant-humidity regulator with a temperature of 25°C and a humidity of 50% for 40-72 hours and then tested at a test speed of 50 mm/min and a maximum load of 10 KN, and a mean tensile strength at break of the 5 sample strips was calculated as an initial tensile strength; the sample strips were placed in a constant-temperature oven at 130°C for a fixed aging time (500 hours), taken out, placed in a constant-temperature and constant-humidity regulator with a temperature of 25°C and a humidity of 50% for 40-72 hours and then tested at a test speed of 50 mm/min and a maximum load of 10 KN, and a mean tensile strength at break of the 5 sample strips after aging was calculated as a tensile strength after aging; and the tensile strength retention rate was obtained by calculation.

Notch impact strength and retention rate: According to the ASTM D256-2010 standard, IZOD notch impact sample strips were prepared by an injection molding process; 5 prepared sample strips were placed in a constant-temperature and constant-humidity regulator with a temperature of 25°C and a humidity of 50% for 40-72 hours and then tested at a test pendulum energy of 2.75 J, and a mean Izod notch impact strength of the 5 sample strips was calculated as an initial notch impact strength; the sample strips were placed in a constant-temperature oven at 130°C for a fixed aging time (500 hours), taken out, placed in a constant-temperature and constant-humidity regulator with a temperature of 25°C and a humidity of 50% for 40-72 hours and then tested, and a mean impact strength of the 5 sample strips after aging was calculated as a notch impact strength after aging; and the impact strength retention rate was obtained by calculation.

Flame retardance: A flammability test was carried out in accordance with the regulation of "Flammability Test of Plastic Materials, UL94". The vertical combustion grade of flame retardance was determined based on a combustion rate, an extinguishing time, an ability to resist dropping, and whether a dropping was burning. Samples used for testing: A length was 125 mm, a width was 13 mm, and a thickness was selected as 1.5 mm during the test in the present invention. According to the UL94 regulation, flame retardant grades of materials can be classified as UL94-HB, V0, V1, and V2.

A preparation process of the polycarbonate alloy compositions in respective examples and comparative examples of the present invention is as follows: after weighing respective components according to a proportion, adding the same into a high-speed mixer for stirring and blending to obtain a premix, and then conducting extrusion in a twin-screw extruder, followed by a melt granulation process to obtain the polycarbonate alloy compositions. A rotation speed of the stirring was 60 rpm/min, and the twin-screw extruder had a length-diameter ratio of 48:1, a screw cylinder temperature of 220°C and a screw rod rotation speed of 400 rpm/min.

### Examples 1-23

Examples 1-23 provide a series of polycarbonate alloy compositions, with formulas shown in Table 2, Table 3 and Table 4.

**Table 2 Formulas in Examples 1-9 (parts by weight)**

| | Example | | | | | | | | |
|---|---|---|---|---|---|---|---|---|---|
| | 1 | 2 | 3 | 4 | 5 | 6 | 7 | 8 | 9 |
| Polycarbonate 1# | 70 | 50 | 85 | 60 | 80 | 70 | 70 | 70 | 70 |
| Styrene-acrylonitrile copolymer compound 1# | 6 | 20 | 1 | 10 | 3 | 6 | 6 | 6 | 6 |
| Toughening agent 1# | 8 | 25 | 1 | 10 | 3 | 8 | 8 | 8 | 8 |
| Stabilizer 1# | 0.4 | 1.33 | 0.066 | 1.0 | 0.1 | 0.4 | 0.3 | 0.6 | / |
| Stabilizer 2# | 0.2 | 0.67 | 0.034 | 0.5 | 0.05 | 0.2 | 0.3 | / | 0.6 |
| Flame retardant 1# | 11 | 20 | 5 | 10 | 7 | 11 | 11 | 11 | 11 |
| Anti-dripping agent | 0.5 | 5 | 0.1 | 0.8 | 0.3 | 0.5 | 0.5 | 0.5 | 0.5 |
| Other auxiliary agents | 0 | 0 | 0 | 0 | 0 | 1 | 0 | 0 | 0 |

**Table 3 Formulas in Examples 10-17 (parts by weight)**

| | Example | | | | | | | |
|---|---|---|---|---|---|---|---|---|
| | 10 | 11 | 12 | 13 | 14 | 15 | 16 | 17 |
| Polycarbonate 1# | 70 | 70 | 70 | 70 | 70 | 70 | 70 | 70 |
| Styrene-acrylonitrile | 6 | / | / | / | / | / | / | / |
| Styrene-acrylonitrile copolymer compound 3# | / | 6 | / | / | / | / | / | / |
| Styrene-acrylonitrile copolymer compound 4# | / | / | 6 | / | / | / | / | / |
| Styrene-acrylonitrile copolymer compound 5# | / | / | / | 6 | / | / | / | / |
| Styrene-acrylonitrile copolymer compound 6# | / | / | / | / | 6 | / | / | / |
| Styrene-acrylonitrile copolymer compound 7# | / | / | / | / | / | 6 | / | / |
| Styrene-acrylonitrile copolymer compound 8# | / | / | / | / | / | / | 6 | / |
| Styrene-acrylonitrile copolymer compound 9# | / | / | / | / | / | / | / | 6 |
| Toughening agent 1# | 8 | 8 | 8 | 8 | 8 | 8 | 8 | 8 |
| Stabilizer 1# | 0.4 | 0.4 | 0.4 | 0.4 | 0.4 | 0.4 | 0.4 | 0.4 |
| Stabilizer 2# | 0.2 | 0.2 | 0.2 | 0.2 | 0.2 | 0.2 | 0.2 | 0.2 |
| Flame retardant 1# | 11 | 11 | 11 | 11 | 11 | 11 | 11 | 11 |
| Anti-dripping agent | 0.5 | 0.5 | 0.5 | 0.5 | 0.5 | 0.5 | 0.5 | 0.5 |

**Table 4 Formulas in Examples 18-23 (parts by weight)**

| | Example | | | | | |
|---|---|---|---|---|---|---|
| | 18 | 19 | 20 | 21 | 22 | 23 |
| Polycarbonate 1# | / | / | / | 70 | 70 | 70 |
| Polycarbonate 2# | 70 | / | / | / | / | / |
| Polycarbonate 3# | / | 70 | / | / | / | / |
| Polycarbonate 4# | / | / | 70 | / | / | / |
| Styrene-acrylonitrile copolymer compound 1# | 6 | 6 | 6 | 6 | 6 | 6 |
| Toughening agent 1# | 8 | 8 | 8 | / | / | 8 |
| Toughening agent 2# | / | / | / | 8 | / | / |
| Toughening agent 3# | / | / | / | / | 8 | / |
| Stabilizer 1# | 0.4 | 0.4 | 0.4 | 0.4 | 0.4 | 0.4 |
| Stabilizer 2# | 0.2 | 0.2 | 0.2 | 0.2 | 0.2 | 0.2 |
| Flame retardant 1# | 11 | 11 | 11 | 11 | 11 | / |
| Flame retardant 2# | / | / | / | / | / | 11 |
| Anti-dripping agent | 0.5 | 0.5 | 0.5 | 0.5 | 0.5 | 0.5 |

### Comparative Example 1

The present comparative example provides a polycarbonate alloy composition, with a formula different from that in Example 1: the styrene-acrylonitrile copolymer compound 1# was changed into an equivalent amount of a styrene-acrylonitrile copolymer compound 10#.

### Comparative Example 2

The present comparative example provides a polycarbonate alloy composition, with a formula different from that in Example 1: the styrene-acrylonitrile copolymer compound 1# was changed into an equivalent amount of a styrene-acrylonitrile copolymer compound 11#.

### Comparative Example 3

The present comparative example provides a polycarbonate alloy composition, with a formula different from that in Example 1: the styrene-acrylonitrile copolymer compound 1# was changed into an equivalent amount of a styrene-acrylonitrile copolymer compound 12#.

### Comparative Example 4

The present comparative example provides a polycarbonate alloy composition, with a formula different from that in Example 1: the styrene-acrylonitrile copolymer compound 1# was changed into an equivalent amount of the styrene-acrylonitrile copolymer 1#.

The properties of the polycarbonate alloy compositions in respective examples and comparative examples were tested according to the above-mentioned test methods. Test results are shown in Table 5.

**Table 5 Property test results of polycarbonate alloy compositions in respective examples and comparative examples**

| Test result | Flame retardant grade | Notch impact strength (J/m) | Tensile strength (MPa) | Aging notch impact strength retention rate (%) | Aging tensile strength retention rate (%) |
|---|---|---|---|---|---|
| Example 1 | V-0 | 534 | 62.1 | 87 | 114 |
| Example 2 | V-0 | 483 | 56.7 | 81.2 | 98 |
| Example 3 | V-0 | 452 | 61.8 | 77.2 | 101 |
| Example 4 | V-0 | 512 | 61.3 | 79.8 | 102 |
| Example 5 | V-0 | 473 | 60.2 | 80.8 | 106 |
| Example 6 | V-0 | 518 | 61.4 | 85.1 | 113 |
| Example 7 | V-0 | 504 | 61.8 | 83.2 | 108 |
| Example 8 | V-0 | 518 | 61.8 | 72.1 | 95 |
| Example 9 | V-0 | 482 | 60.6 | 73.4 | 100 |
| Example 10 | V-0 | 473 | 62.1 | 77.4 | 105 |
| Example 11 | V-0 | 524 | 61.9 | 81.3 | 112 |
| Example 12 | V-0 | 498 | 60.8 | 78.3 | 107 |
| Example 13 | V-0 | 514 | 60.2 | 80.4 | 108 |
| Example 14 | V-0 | 492 | 59.3 | 68.3 | 98.7 |
| Example 15 | V-0 | 397 | 67.3 | 54.3 | 108 |
| Example 16 | V-0 | 412 | 58.1 | 62.1 | 96.8 |
| Example 17 | V-0 | 388 | 62.3 | 60.8 | 95.4 |
| Example 18 | V-0 | 520 | 60.1 | 77 | 108 |
| Example 19 | V-0 | 483 | 62.3 | 64 | 110 |
| Example 20 | V-0 | 323 | 58.5 | 54 | 98.3 |
| Example 21 | V-0 | 534 | 59.1 | 88 | 114 |
| Example 22 | V-0 | 332 | 62.1 | 65.3 | 96 |
| Example 23 | V-0 | 438 | 64.2 | 58.3 | 93 |
| Comparative Example 1 | V1 | 123 | 62.3 | 32.1 | 54.6 |
| Comparative Example 2 | V1 | 234 | 43 | 12.5 | 44.2 |
| Comparative Example 3 | V1 | 108 | 53.1 | 33.2 | 83.5 |
| Comparative Example 4 | V2 | 113 | 42.1 | 14.3 | 82 |

It can be known from Table 5 that:
the polycarbonate alloy compositions in Examples 1-23 have good flame retardance (V-0 grade), good aging notch impact strength retention rates (greater than 50%) and good aging tensile strength retention rates (greater than 50%).

It can be known from Examples 1-5 that use amounts of the respective components have certain impacts on the notch impact strength, the tensile strength, the aging notch impact strength retention rate and the aging tensile strength retention rate after long-term thermo-oxidative aging. The use amount of the polycarbonate is higher in Examples 1, 3, 4 and 5, and the polycarbonate undergoes Fries rearrangement under the combined action of heat and oxygen during the aging, leading to increase of a content of a cross-linked structure. Thus, the case that the aging tensile strength retention rate is higher than 100% occurs. Under comprehensive regulation of the respective components, the aging notch impact strength retention rate and the aging tensile strength retention rate in Example 1 are the highest, and the aging tensile strength retention rates in Examples 4 and 5 are higher than those in Examples 2 and 3.

It can be known from Examples 1, 7, 8 and 9 that when the composite stabilizer is selected (Examples 1 and 7), the aging notch impact strength retention rates and aging tensile strength retention rates of the polycarbonate alloy compositions are higher.

It can be known from Examples 1 and 10-13 that when the mass ratio of the styrene-acrylonitrile copolymer to the maleic anhydride grafted styrene-acrylonitrile copolymer is (2-8):1, the polycarbonate alloy compositions all have good aging notch impact strength retention rates and aging tensile strength retention rates. Further, when the mass ratio of the styrene-acrylonitrile copolymer to the maleic anhydride grafted styrene-acrylonitrile copolymer is regulated to (2-7):1, the aging notch impact strength retention rates and aging tensile strength retention rates of the obtained polycarbonate alloy compositions are higher.

It can be known from Examples 1 and 14 that when the styrene-acrylonitrile copolymer synthesized by the bulk polymerization method is selected, the styrene-acrylonitrile copolymer has better compatibility with the polycarbonate, so that the aging notch impact strength retention rate and aging tensile strength retention rate of the polycarbonate alloy composition are higher.

It can be known from Examples 1 and 15-17 that the grafting rate of the maleic anhydride grafted styrene-acrylonitrile copolymer in the styrene-acrylonitrile copolymer compound has a certain regular impact on the aging tensile strength retention rates of the polycarbonate alloy compositions. When the grafting rate of the maleic anhydride grafted styrene-acrylonitrile copolymer is 0.3-1.5% (Examples 1, 15 and 16), the aging tensile strength retention rates of the polycarbonate alloy compositions are higher.

It can be known from Examples 1 and 18-20 that when the average molecular weight of the polycarbonate is within an appropriate range (20,500-33,500), the aging notch impact strength retention rates and aging tensile strength retention rates of the polycarbonate alloy compositions are higher.

It can be known from Examples 1 and 21-22 that when the ash content of the toughening agent is within an appropriate range (0.8-1.2 wt%), the aging notch impact strength retention rates and aging tensile strength retention rates of the polycarbonate alloy compositions are higher.

It can be known from Examples 1 and 23 that when the phosphorus based flame retardant is selected, the aging notch impact strength retention rate and aging tensile strength retention rate of the polycarbonate alloy composition are higher.

The mass ratios of a styrene-acrylonitrile copolymer to a maleic anhydride grafted styrene-acrylonitrile copolymer in the styrene-acrylonitrile copolymer compounds added in Comparative Examples 1 and 2 are improperly regulated, and the aging notch impact strength retention rates and aging tensile strength retention rates of the obtained polycarbonate alloy compositions are lower, wherein the aging notch impact strength retention rates in Comparative Examples 1 and 2 are both lower than 50%, and the aging tensile strength retention rate in Comparative Example 2 is lower than 50%. The styrene-acrylonitrile copolymer compound added in Comparative Example 3 is obtained by compounding a styrene-acrylonitrile copolymer and the acrylic acid grafted styrene-acrylonitrile copolymer, and the aging notch impact strength retention rate of the finally obtained polycarbonate alloy composition is lower than 50%. The polycarbonate alloy composition in Comparative Example 4 does not contain a maleic anhydride grafted styrene-acrylonitrile copolymer, and the aging notch impact strength retention rate is lower than 50%.

Obviously, the above examples of the present invention are only instances for clearly illustrating the present invention and are not limitations of the embodiments of the present invention. For those of ordinary skill in the art, other changes or alternations in different forms can also be made on the basis of the above description. It is not necessary and possible to list all of the embodiments herein. Any modifications, equivalent substitutions, improvements and the like made within the spirit and principles of the present invention shall be included in the scope of protection of the claims of the present invention.

## Claims

1. A polycarbonate alloy composition with stable thermo-oxidative aging performance, comprising the following components in parts by weight:
50-85 parts of polycarbonate,
1-20 parts of a styrene-acrylonitrile copolymer compound,
5-20 parts of a flame retardant,
1-25 parts of a toughening agent,
0.1-2 parts of a stabilizer, and
0.1-5 parts of an anti-dripping agent,
wherein the styrene-acrylonitrile copolymer compound is composed of a styrene-acrylonitrile copolymer and a maleic anhydride grafted styrene-acrylonitrile copolymer at a mass ratio of (2-8):1.

2. The polycarbonate alloy composition according to claim 1, wherein the mass ratio of the styrene-acrylonitrile copolymer to the maleic anhydride grafted styrene-acrylonitrile copolymer is (2-7):1.

3. The polycarbonate alloy composition according to claim 1, wherein the styrene-acrylonitrile copolymer is obtained by a bulk polymerization method.

4. The polycarbonate alloy composition to claim 1, wherein a grafting rate of the maleic anhydride grafted styrene-acrylonitrile copolymer is 0.3-1.5%.

5. The polycarbonate alloy composition according to claim 1, wherein an average molecular weight of the polycarbonate is 20,500-33,500.

6. The polycarbonate alloy composition according to claim 1, wherein a metal ash content of the toughening agent is ≤1.2 wt%.

7. The polycarbonate alloy composition according to claim 1, wherein the flame retardant is a phosphorus based flame retardant.

8. The polycarbonate alloy composition according to claim 1, wherein the stabilizer is composed of an epoxy stabilizer and a hindered phenol stabilizer at a mass ratio of (2-1):1.

9. A method for preparing the polycarbonate alloy composition according to any one of claims 1-8, comprising the following steps: mixing the respective components, conducting melt extrusion, and conducting granulation to obtain the polycarbonate alloy composition.

10. Use of the polycarbonate alloy composition according to any one of claims 1-8 in preparation of an energy storage device.
